# EUROPÄISCHE PATENTANMELDUNG

(11) **EP 1 545 112 A2**
(43) Veröffentlichungstag der Anmeldung: **22.06.2005**
(21) Anmeldenummer: 04029797.0
(22) Anmeldetag: 16.12.2004
(51) Int. Cl.: H04M 7/00, H04M 11/00

(54) **Einrichtung zur Fernkommunikation mit Hausgeräten**

(30) Priorität: 20.12.2003 DE 10360171
(71) Anmelder: Diehl AKO Stiftung & Co. KG, 88239 Wangen (DE)
(72) Erfinder: Taag, Jürgen, 88239 Wangen (DE)
(74) Vertreter: Diehl Patentabteilung

(57) **Zusammenfassung**

Eine Einrichtung (10) mit einer Hauszentrale (11) zur direkten Fernkommunikation und/oder zur Fernkommunikation über Datenknoten (16) mit Hausgeräten (17, 18, 19, 20, 21), welche eine Kommunikation mit hinsichtlich des Datenverkehrs unterschiedlich leistungsstarken Hausgeräten (17, 18, 19, 20, 21) ohne lange Blockade des Datenverkehrs über ein Hausnetz (9) ermöglicht, ergibt sich, wenn die Hauszentrale (11) zwischen unterschiedlich hohen Datenraten (13, 14) umschaltbar ist. Dadurch können Hausgeräte (17, 18, 19, 20, 21) mit sehr unterschiedlichen Datenraten (13, 14) über dasselbe Hausnetz (9) und dieselbe Hauszentrale (11) angesprochen werden, gegebenenfalls unter Zwischenspeicherung der zu übertragenden Daten in einem Datenknoten (16), der mit hoher Datenrate (14) ansprechbar und mit niedriger Datenrate (13) auslesbar ist.

## Beschreibung

Die Erfindung betrifft eine Einrichtung zur Fernkommunikation mit Hausgeräten gemäß dem Oberbegriff des Anspruches 1.

Eine gattungsgemäße Einrichtung zur Fernkommunikation mit Hausgeräten wurde von der Firma IBM unter dem Namen "Arigo" mit Datenübertragung über das Haushaltsstromnetz (sogenannte Powerline Communication (PLC)) propagiert (Computer Zeitung Nr. 32 vom 10.08.1995, S. 16: "Das Arigo-System überwacht und automatisiert den Haushalt; IBMs moderne Heinzelmännchen kommunizieren über das Energienetz). Zur Fernsteuerung bzw. zur Fernabfrage von Hausgeräten über eine Hauszentrale ist nur eine geringe Datenmenge zu übertragen. Für die Übertragung dieser Datenmenge in Form von Datentelegrammen wird daher keine hohe Datenrate benötigt. Hausgeräte, wie Wäschetrockner oder Waschmaschinen, verfügen für die Datenkommunikation über ein Kommunikationsmodul, das entsprechend dem Übertragungsstandard Konnex PL132 arbeitet. Hierbei steht beispielsweise für die Übertragung von Zustands- und Steuersignalen zwischen Hauszentrale und Hausgeräten eine maximale Datenrate von 2400 Bit/s zur Verfügung. In einem Datentelegramm steht aber nur ein Bruchteil der Bits für Nutzdaten zur Verfügung, ein Anteil des Datentelegramms ist für die Übertragungssteuerung reserviert. Dementsprechend reduziert sich die Nutzdatenrate. Es kann jedoch erforderlich sein, über die Hauszentrale an ein oder mehrere Hausgeräte auch eine größere Datenmenge, wie eine neue Version einer Applikationssoftware oder eine Änderung einer Hausgerätesoftware, zu übertragen. Dann ist man mit dem Problem konfrontiert, dass diese sehr große Datenmenge bei einer extrem niedrigen resultierenden Nutzdatenrate übertragen werden muss. Dies führt im schlechtesten Fall dazu, dass über eine nicht akzeptable Zeit hinweg der normale Betrieb der Hauszentrale bzw. der Datenverkehr über das Hausnetz, d. h. die Kommunikation mit dem angeschlossenen Hausgerätepark, blockiert ist. Erst nach Abschluss des zur Übertragung der Software erforderlichen kompletten Datentransfers ist wieder ein Normalbetrieb möglich. Das ist aus Kundensicht ein nicht tolerierbarer Zustand, weil der Kunde diese technische Notwendigkeit nicht kennt und auf unterbrechungsfreie Information über den Hausgerätepark angewiesen ist.

Der vorliegenden Erfindung liegt daher die technische Problemstellung zugrunde, eine Einrichtung zur Fernkommunikation mit Hausgeräten, gegebenenfalls über Datenknoten, zu realisieren, welche auch bei großen zu übertragenden Datenmengen nach kurzer Zeit wieder den Normalbetrieb der Kommunikation über das Hausnetz ermöglicht.

Diese Aufgabe ist gemäß der im Hauptanspruch angegebenen Merkmalskombination dadurch gelöst, dass die Hauszentrale zwischen unterschiedlichen Datenraten umschaltbar ist. Dadurch kann je nach Datenaufkommen eine adäquate Datenrate zur Informationsübertragung ausgewählt werden, ohne eine lange Blockade des Datenverkehrs der Hauszentrale (über PLC oder andere drahtgebundene oder drahtlose Kommunikationswege wie insbesondere Funkdatenkommunikation) für die im Normalbetrieb anfallende Fernsteuerung und Fernabfrage von Hausgeräten in Kauf nehmen zu müssen. So können problemlos Hausgeräte unterschiedlicher Leistungsstärke bzgl. ihrer Kommunikation in den Datenverkehr über ein gemeinsames Hausnetz integriert werden.

Dadurch können mittels dieser Erfindung für die Datenübertragung im Hausnetz sowohl der gängige PLC-Standard mit der niedrigen Datenrate als auch ein weiteres Protokoll mit höherer Datenrate oder z.B. auch Funkstandards mit unterschiedlichen Datenraten benutzt werden. Konnex PL132 wird hauptsächlich für die Datenübertragung zwischen Hauszentrale und einfachen Hausgeräten, wie Kühlschränken, Waschmaschinen, Wäschetrocknern usw., eingesetzt, die nur über ein kostengünstiges Kommunikationsmodul verfügen, weil hier der Schwerpunkt der Datenkommunikation im Allgemeinen auf der reinen Steuerung und der Femabfrage über den Betriebszustand der Hausgeräte liegt.

Darüber hinaus ist ein vorteilhafter Aspekt der Erfindung, dass eine aus Kundensicht wünschenswerte Einrichtung realisierbar geworden ist, die es ermöglicht, dass mittels derselben Hauszentrale mit sämtlichen, in Bezug auf ihre Datenkommunikation unterschiedlich leistungsstarken Hausgeräten kommuniziert werden kann. Ein PC verfügt immer über Schnittstellen, d. h. Kommunikationsmodule, die höchsten Datenübertragungsansprüchen genügen; das gilt sowohl für die PC-Struktur in einer Steuerung, hier also in der Hauszentrale, wie auch für einen über PLC bedienbaren PC. Diese Anforderungen werden an die Schnittstelle einer Waschmaschine nicht gestellt, weil sie unter anderen Gesichtspunkten bezüglich Preis und Technik hergestellt wird. Eine Waschmaschine weist daher meistens ein Kommunikationsmodul auf, das nur in der Lage ist, relativ niedrige Datenraten verarbeiten zu können.

Zudem kann durch die Erfindung unter Beibehaltung des Datentelegrammaufbaus bei einer Erhöhung der Datenrate eine Verkürzung der Übertragungszeit erreicht werden, weil die Hauszentrale nun die Möglichkeit eröffnet, auf eine optimale Datenrate umzuschalten. Dadurch kann an ein einfaches Hausgerät, das mit einem digitalen Signalprozessor (DSP) oder mit einem angepassten, schnellen Powerline-Interface (SPI) nachgerüstet ist, oder an einen Datenknoten in kürzerer Zeit eine große Datenmenge geschickt werden.

Unter einem Datenknoten im Sinne vorliegender Erfindung wird eine Zwischenstation verstanden, die über eine Sende- und Empfangseinheit für Daten verfügt und für eine Informationsweiterleitung an ein ausgesuchtes von mehreren angeschlossenen Hausgeräten sorgt.

Üblicherweise ist die Hauszentrale mit einem DSP oder allgemein mit einem SPI ausgestattet, die es ermöglichen, dass auch Signale höherer Datenrate sicher erkannt werden. Denn mittels eines DSP sind im Vergleich zu einem auf dem Konnex PL132 basierenden Kommunikationsmodul zusätzliche Auswerte- und Filterverfahren möglich, die einen fehlerfreien Datentransfer auch bei hohen Datenraten gewährleisten. Vorzugsweise wird deshalb auch das Hausgerät bzw. der Datenknoten mit einem DSP ausgerüstet oder im Bedarfsfall zur Übertragung großer Datenmengen nachgerüstet.

Durch die Erfindung ist also eine große Datenmenge ohne übermäßigen Zeitaufwand, d. h. ohne merkliche Beeinträchtigung des Normalbetriebs des Datenverkehrs über das Hausnetz, zwischen einer Hauszentrale und Hausgeräten bzw. Datenknoten übertragbar, indem abhängig von der zu übertragenden Datenmenge durch die Hauszentrale auf eine geeignete Datenrate umgeschaltet werden kann. Dadurch können auch bzgl. ihrer Kommunikation unterschiedlich leistungsstarke Geräte in ein gemeinsames Hausnetz integriert werden.

Vorteilhaft ist es, dass ein dem Hausgerät vorgeschalteter Datenknoten darauf ausgelegt ist, mit mehreren, unterschiedlichen Datenraten übertragen zu können. In diesem Fall ist es ausreichend, wenn nur der Datenknoten mit einem Kommunikationsmodul ausgestattet ist, welches es ermöglicht, auch hohe Datenraten verarbeiten zu können, wenn in dem Datenknoten die zu übertragende Gesamtdatenmenge zwischengespeichert werden kann. Denn dann kann von dort aus an das betreffende Hausgerät, wenn dieses beispielsweise nur einen integrierten Baustein für Konnex PL132 besitzt, bei der relativ geringen Datenrate weiter übertragen werden. Durch einen derartigen Übertragungsvorgang steht das PLC-Hausnetz für den Datenverkehr bzw. die Hauszentrale nur während der Übertragung von der großen Datenmenge zum Datenknoten anderweitig nicht zur Verfügung. Danach sind von der Blockade der Datenkommunikation nur die hinter dem Datenknoten angeschlossenen Hausgeräte betroffen, solange dieser nun mit der niedrigen Datenrate die zwischengespeicherte Information an das adressierte Hausgerät ausgibt.

Sinnvollerweise schickt die Hauszentrale vor jedem Umschaltvorgang auf eine andere Datenrate eine Mitteilung über die ab diesem Zeitpunkt aktuelle Datenrate und vorzugsweise auch über die (voraussichtliche) Zeitdauer der Verwendung dieser Datenrate an die angeschlossenen Hausgeräte bzw. Datenknoten. Nach jedem derartigen Umschaltvorgang erfolgt auch eine Anpassung der Taktfrequenz, mit der die Datentelegramme aktuell übermittelt werden.

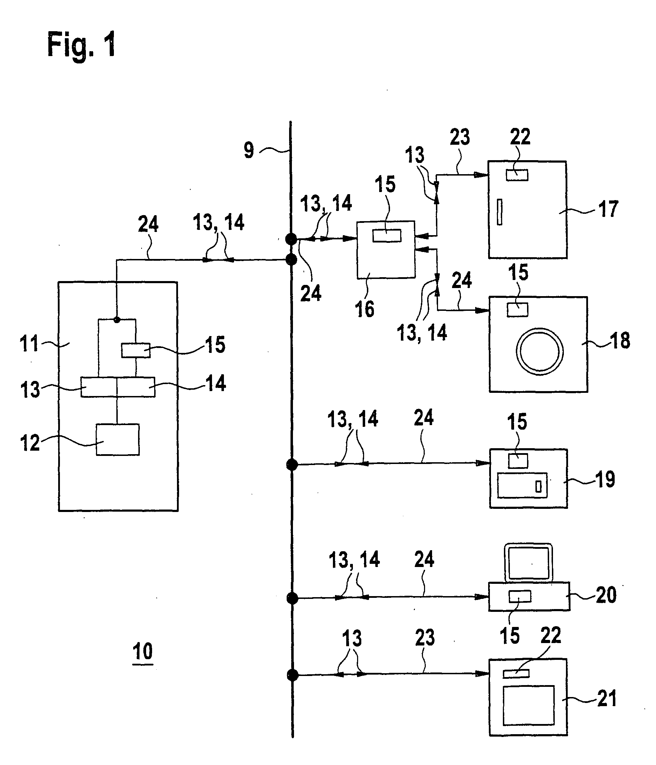

Aus den weiteren Ansprüchen und der nachstehenden Beschreibung eines in der Zeichnung nach Art eines Blockschaltbildes stark abstrahierten Realisierungsbeispiels für eine erfindungsgemäße Einrichtung ergeben sich zusätzliche Vorteile und Weiterbildungen der Erfindung. Zur Vereinfachung dieser Beschreibung und der Anspruchsformulierungen ist eine schnelle Datenschnittstelle nachstehend immer als digitaler Signalprozessor (DSP) bezeichnet, obgleich diese Schnittstelle apparativ auch anders ausgestaltet sein kann.

Die einzige Figur der Zeichnung zeigt den Aufbau eines Hausnetzes, enthaltend eine Hauszentrale und einen damit vernetzten Datenknoten und Hausgeräte, welche auf einen Datentransfer mit unterschiedlichen Datenraten ausgelegt sind.

Bei der hier dargestellten - auf das PLC-Verfahren ausgelegten - Einrichtung 10 zur Fernkommunikation sind an eine Netzleitung des Hausnetzes 9 einerseits eine Hauszentrale 11 und andererseits, direkt oder über einen Datenknoten 16, sehr unterschiedliche Hausgeräte 17, 18, 19, 20, 21 angeschlossen. Die Hauszentrale 11 ist in diesem Beispielsfall über eine Umschaltvorrichtung 12 zwischen zwei Datenraten 13, 14 umschaltbar. Bei der Datenrate 13 kann es sich um die auf dem Konnex PL132 basierende Datenrate von 2400 Bit/s handeln. Bei der Datenrate 14 handelt es sich um einen im Vergleich zur Datenrate 13 höheren Wert. Ein fehlerfreier Empfang und Versand von Signalen bei der höheren Datenrate 14 ist über einen Signalprozessor oder ein anderes Powerline-Interface, nachstehend allgemein als DSP 15 bezeichnet, sichergestellt.

Auch das Hausgerät 18 kann unmittelbar über das Hausnetz 9 kommunizieren. Im Ausführungsbeispiel ist aber vorgesehen, dass die zwei Hausgeräte 17 und 18 über einen Datenknoten 16 mit dem Hausnetz 9 verbunden sind. Der Datenknoten 16 verfügt über einen DSP 15, um auch höhere Datenraten verarbeiten zu können. Das Hausgerät 17, etwa ein Kühlschrank, verfügt im Gegensatz zum Hausgerät 18, etwa einer Waschmaschine, nicht über einen DSP 15, sondern nur über ein einfacheres Kommunikationsmodul 22. Bei diesem Kommunikationsmodul 22 kann es sich um einen integrierten Baustein für den Konnex PL132-Standard handeln. Der Kühlschrank (17) kann daher nur Datenmengen mit der geringen Datenrate 13 empfangen und senden. Die Waschmaschine (18) hingegen kann wegen ihres DSP 15 mit beiden Datenraten 13, 14 empfangen und senden.

Über Netzleitungen 24 können aufgrund an deren Enden angeschlossener Hausgeräte 18, 19, 20 bzw. Datenknoten 16 und Hauszentrale 11 Datenmengen mit der Datenrate 13 oder 14 übertragen werden. Zur Veranschaulichung sind weitere Netzleitungen mit 23 bezeichnet, um anzugeben, dass hierüber eine Informationsübertragung nur mit geringer Datenrate 13 möglich ist, weil und solange das angeschlossene Hausgerät (17, 21) nicht über eine schnellere Schnittstelle verfügt.

Muss von der Hauszentrale 11 aus eine große Datenmenge, wie eine neue Applikationssoftware, an das Hausgerät 19, etwa einen Mikrowellenofen, gesendet werden, so kann die Hauszentrale 11 an alle Hausgeräte 17, 18, 19,20,21 die Mitteilung schicken, dass ab diesem Zeitpunkt und für eine bestimmte Zeitdauer die Datenrate 14 aktuell ist und auf diese umschalten. Dabei ist es zweckmäßig, dass die Geräte 17, 21 mit langsamer Schnittstelle 22 für den Datenverkehr gesperrt werden, um nicht Fehlinformationen aufzunehmen. Weiterhin erfolgt auch eine Anpassung der Taktfrequenz an die aktuelle Datenrate. Dann kann die Applikationssoftware innerhalb kürzerer Zeit im Vergleich zum Zeitbedarf bei der geringeren Standarddatenrate 13 an den Mikrowellenofen (19), der mit einem DSP 15 bestückt ist, gesendet werden. Eine Beeinträchtigung des Datenverkehrs mit den restlichen Hausgeräten 17, 18, 20, 21 verkürzt sich entsprechend.

Selbst das Hausgerät 20, ein PC, kann aufgrund der Umschaltmöglichkeit 12 der Hauszentrale 11 problemlos in den Datenverkehr über das Hausnetz 9 integriert werden. Denn da die Hauszentrale 11 auch bei der hohen Datenrate 14 senden und empfangen kann, kann auch das in der Regel große Datenaufkommen wie bei einem PC (20) innerhalb kurzer Zeit bewältigt werden, ohne dass es zu gravierenden Beeinträchtigungen des Datenverkehrs über das Hausnetz 9 kommt. Zur Vereinfachung der Darstellung ist in der Skizze auch der PC (20) mit einem DSP 15 als schneller Schnittstelle ausgestattet; für alle Geräte gilt im Rahmen vorliegender Erfindung, dass anstelle eines DSP die Schnittstelle auch anders ausgelegt sein kann.

Zwischen der Hauszentrale 11 und dem Datenknoten 16 können Daten mit jeder von beiden Datenraten 13, 14 gesendet und empfangen werden. Wenn von der Hauszentrale 11 etwa an den Kühlschrank (17) eine große Datenmenge geschickt werden soll, dann wird, unter der Voraussetzung, dass der Datenknoten 16 über einen Zwischenspeicher für die große Datenmenge verfügt und wie die Hauszentrale 11 auch bei der geringen Datenrate 13 senden und empfangen kann, sinnvollerweise von der Hauszentrale 11 aus auf die hohe Datenrate 14 umgeschaltet und innerhalb kurzer Zeit die Datenmenge auf den Datenknoten 16 zur Zwischenspeicherung transferiert. Dieser Datenknoten 16 kann dann unter Verwendung der geringen Datenrate 13 an den Kühlschrank (17) die Datenmenge weiterleiten. Dafür ist wegen der geringen Übertragungsrate 13 eine lange Zeitspanne erforderlich. Blockiert gegenüber dem Datenstrom auf dem Hausnetz 9 sind in diesem Beispielsfall jedoch nur die beiden dem Datenknoten 16 nachgeschalteten Hausgeräte 17 und 18. Zum Verständnis sei noch einmal hervorgehoben, dass das Hausgerät 18 über eine schnelle Schnittstelle, einen DSP 15 verfügt, und somit eine Anbindung des Hausgerätes 18 über den Datenknoten 16 nicht erforderlich wäre.

Zur Übertragung einer großen Datenmenge von der Hauszentrale 11 an die Waschmaschine (18) über den Datenknoten 16 kann vor und hinter dem Datenknoten 16 die hohe Datenrate 14 verwendet werden, da alle drei an der Übertragung beteiligten Stationen, nämlich Hauszentrale 11, Datenknoten 16 und Waschmaschine (18), mit einem DSP 15 ausgestattet sind, der einen fehlerfreien Datentransfer auch bei einer hohen Übertragungsgeschwindigkeit ermöglicht. Damit erübrigt sich ein Zwischenspeichern der Information im Datenknoten 16, der Datenstrom wird einfach durchgeleitet.

An das Hausgerät 21, etwa einen Wäschetrockner, können Daten nur mit der kleineren Datenübertragungsrate 13 übermittelt werden, da es nur über ein leistungsschwaches Kommunikationsmodul 22 verfügt. Muss beispielsweise eine Änderung einer Software, d. h. eine große Datenmenge, von der Hauszentrale 11 aus über das Hausnetz 9 direkt auf den Wäschetrockener (21) übertragen werden, so bedeutet dies eine Blockade des übrigen Datenverkehrs über das Hausnetz 9. Geschickter ist es, Hausgeräte 21, wie den Wäschetrockner (18), über einen Datenknoten 16 an die Hauszentrale 11 anzubinden, der die einlaufenden Telegramme in Echtzeit aufnimmt und zwischenspeichert, deren Datenrate zu hoch für das angeschlossene Gerät ist.

Eine auf das PLC-Verfahren ausgelegte Einrichtung 10 mit einer Hauszentrale 11 zur direkten Fernkommunikation und/oder zur Fernkommunikation über Datenknoten 16 mit Hausgeräten 17, 18, 19, 20, 21, welches eine Kommunikation mit hinsichtlich des Datenverkehrs unterschiedlich leistungsstarken Hausgeräten 17, 18, 19, 20, 21 ohne lange Blockade des Datenverkehrs über ein Hausnetz 9 ermöglicht, ergibt sich also erfindungsgemäß, wenn die Hauszentrale 11 zwischen unterschiedlich hohen Datenraten 13, 14 umschaltbar ist. Dadurch können Hausgeräte 17, 18, 19, 20, 21 mit sehr unterschiedlichen Datenraten 13, 14 über dasselbe Hausnetz 9 und dieselbe Hauszentrale 11 angesprochen werden, gegebenenfalls unter Zwischenspeicherung der zu übertragenden Daten in einem Datenknoten 16, der mit hoher Datenrate 14 ansprechbar und mit niedriger Datenrate 13 auslesbar ist.

## Patentansprüche

1. Einrichtung (10) zur Fernkommunikation mit Hausgeräten (17, 18, 19, 20, 21) von einer Hauszentrale (11) aus,
**dadurch gekennzeichnet,**
**dass** die Einrichtung (10) Hausgeräte (17, 18, 19, 20, 21) aufweist, die mit unterschiedlichen Datenraten (13, 14) ansprechbar sind und dass die Hauszentrale (11) je nach dem anzusprechenden Hausgerät (17, 18, 19, 20, 21 ) auf die entsprechende Datenrate (13, 14) umschaltbar ist.

2. Einrichtung nach Anspruch 1,
**dadurch gekennzeichnet,**
**dass** die Einrichtung (10) auf das PLC-Verfahren ausgelegt ist und die Hauszentrale (11) ein schnelles Powerline-Interface SPI aufweist oder dass die Hauszentrale (11) eine, vorzugsweise von einem digitalen Signalprozessor DSP (15) gebildete, Schnittstelle zur Aufbereitung von Signalfolgen mit hohen Signalraten aufweist.

3. Einrichtung nach einem der vorangehenden Ansprüche,
**dadurch gekennzeichnet,**
**dass** eine Ansteuerung von Hausgeräten (17, 18) von der Hauszentrale (11) aus über einen Datenknoten (16) erfolgt, der unterschiedliche Datenraten (13, 14) verarbeiten kann.

4. Einrichtung nach Anspruch 3,
**dadurch gekennzeichnet,**
**dass** der Datenknoten (16) die Information mit einer hohen Datenrate (14) aufnimmt, zwischenspeichert und mit einer niedrigen Datenrate (13) an ein angeschlossenes Hausgerät (18) weitergibt.

5. Einrichtung nach einem oder mehreren der vorangehenden Ansprüche,
**dadurch gekennzeichnet,**
**dass** Hausgeräte (18, 19, 20) zur Erhöhung der zu verarbeitenden Datenrate mit einem DSP (15) ausgestattet sind.

6. Einrichtung nach einem oder mehreren der vorangehenden Ansprüche,
**dadurch gekennzeichnet,**
**dass** die Hauszentrale (11) vor jedem Umschaltvorgang auf eine andere Datenrate (13,14) eine Mitteilung über die ab diesem Zeitpunkt und für eine bestimmte Zeitdauer aktuelle Datenrate (13, 14) an Hausgeräte (17, 18, 19, 20, 21) bzw. an Datenknoten (16) schickt, die mit umschaltbaren Datenraten (13, 14) betreibbar sind.

7. Einrichtung nach einem oder mehreren der vorangehenden Ansprüche,
**dadurch gekennzeichnet,**
**dass** Hausgeräte (17, 21), die eine Schnittstelle (22) mit niedriger Datenrate (13) aufweisen, eingangsseitig oder ausgangsseitig gesperrt sind, wenn und solange über das Hausnetz (9) eine Information mit hoher Datenrate (14) übermittelt wird.
